Europäisches Patentamt

European Patent Office

Office européen des brevets

(11) Veröffentlichungsnummer: **0 387 673**
**A2**

(12) # EUROPÄISCHE PATENTANMELDUNG

(21) Anmeldenummer: **90104313.3**

(51) Int. Cl.⁵: **G06F 15/40**

(22) Anmeldetag: **07.03.90**

(30) Priorität: **08.03.89 DE 3907487**

(43) Veröffentlichungstag der Anmeldung:
**19.09.90 Patentblatt 90/38**

(84) Benannte Vertragsstaaten:
**DE FR GB IT SE**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Matthäus, Jürgen**
**c/o Grundig E.M.V. Kurgartenstrasse 37,**
**D-8510 Fürth/Bay(DE)**
Erfinder: **Barounig, Friedrich, Dr.,**
**c/o Grundig E.M.V. Kurgartenstrasse 37**
**D-8510 Fürth/Bay(DE)**

(54) **Vorrichtung zum Speichern und Wiedergewinnen von Bildinformationen.**

(57)
2.1 In der Vergangenheit wurde Massenschriftgut meist mikroverfilmt, wodurch der Bedarf an Archivmitteln wesentlich reduziert und auch gesetzliche Aufbewahrungsfristen erfüllt werden konnten. In jüngster Zeit wurden Vorrichtungen entwickelt, bei denen digitale Speichermedien, zum Beispiel magnetische oder magnetisch-optische Speichermedien eingesetzt werden.

2.2 Um auf einfache Art und Weise das Speichern und Wiedergewinnen von in verschiedenen Dateien befindlichen Bild-Informationen zu ermöglichen, weist die neue Vorrichtung eine für Mikrofilm und/oder Mikrofiche-Datei und für auf Magnetband befindliche Datei gemeinsame Steuereinrichtung auf. Das Heraussuchen der gewünschten Bild-Informationen aus den beiden Dateien erfolgt mittels gespeicherter Suchinformationen, welche für die Dateien das gleiche Format aufweisen.

2.3 Die neue Vorrichtung wird vorzugsweise zur Archivierung von Massenschriftgut eingesetzt.

FIG.1

## VORRICHTUNG ZUM SPEICHERN UND WIEDERGEWINNEN VON BILDINFORMATIONEN

Die Erfindung betrifft eine Vorrichtung zum Speichern und Wiedergewinnen von Bild-Informationen nach dem Oberbegriff des Patentanspruchs 1.

Um die Papierflut in den Griff zu bekommen, wurde in der Vergangenheit Massenschriftgut meist mikroverfilmt. Bei der Mikroverfilmung ist Vorsorge dafür zu treffen, daß Fälschungen oder Verfälschungen ausgeschlossen sind und das Originalschriftgut wurde erst dann vernichtet, wenn nach Überprüfung des Mikrofilms oder Microfiches die Vollständigkeit der Aufnahmen und deren einwandfreie Wiedergabe festgestellt worden ist. Durch die Mikroverfilmung konnte der Bedarf an Archivmitteln, zum Beispiel Ordnern, Mappen, Regalen, Schränken usw. wesentlich reduziert werden. Weiterhin können durch die Mikroverfilmung gesetzliche Aufbewahrungsfristen erfüllt werden. Zudem kann nachträglich ein auf Mikrofilm festgehaltenes Schriftgut nicht mehr geändert werden, ohne daß dies sichtbar wird. Schließlich bietet die Mikroverfilmung den Vorteil, daß eine Integration des Mikrofilm-Systems in Systemen der elektronischen und automatischen Datenerfassung und -verarbeitung möglich ist.

In jüngster Zeit sind Vorrichtungen entwickelt worden, bei denen die Bild-Informationen des Schriftguts durch zweidimensionale optische Abtastung fotoelektrisch umgesetzt und dann in einem digitalen Speicher großer Kapazität gespeichert wurden.

Aus der DE-OS 36 37 767 ist ein Datei-System bekannt, bei dem die Bild-Information auf Mikrofilm und optischer Speicherplatte gespeichert ist. Die Kosten für ein optisches Plattenspeichersystem sind relativ hoch, so daß untersucht wurde, welcher kostengünstigere Bild-Informationsspeicher großer Kapazität zur Archivierung von Massenschriftgut eingesetzt werden kann. Aus der US-PS 3.946.959 ist es bekannt, als Bild-Informationsspeicher ein Magnetband einzusetzen.

Der Erfindung liegt die Aufgabe zugrunde, eine Vorrichtung zum Speichern und Wiedergewinnen von Bild-Informationen derart auszugestalten, daß auf einfache Art und Weise das Speichern und Wiedergewinnen von in verschiedenen Dateien befindlichen Bild-Informationen ermöglicht wird.

Diese Aufgabe wird bei einer gattungsgemäßen Vorrichtung durch die kennzeichnenden Merkmale des Patentanspruchs 1 gelöst.

Die erfindungsgemäße Vorrichtung weist den Vorteil auf, daß die Informationsspeicherung und -verwaltung mit kostengünstigen Mitteln vorgenommen werden kann und daß ein schnelles Ablegen, Ergänzen und Wiederfinden sowie eine einfache Handhabung gewährleistet ist.

Weist gemäß Patentanspruch 2 die Vorrichtung eine Eingabeeinrichtung und eine Anzeigeeinrichtung auf, so kann der Benutzer auf einfache Art und Weise die gewünschte Bildinformation heraussuchen und diese als zweidimensionales sichtbares Bild reproduzieren.

Die Vorrichtung gemäß Patentanspruch 3 weist u.a. zur zeilenweisen Abtastung des Mikrofilms oder Mikrofiches ein lineres Halbleiter-Sensorelement auf, welches aufgrund seiner äußeren Abmessungen in einem Mikrofilmsystem eingesetzt werden kann. Dieser Einsatz des linearen Halbleiter-Sensorelements ist an sich aus der EP-A2-O 057 748 bekannt. Bei der neuen Vorrichtung wird die vom linearen Halbleiter-Sensorelement erzeugte Bild-Information, welche auch Mikrofilm-Nummer und Mikrobild-Nummer umfaßt, durch die Steuereinrichtung mit der aus dem Suchinformations-Speicher ausgelesenen Suchinformation verknüpft, so daß ein einfaches Heraussuchen der gewünschten Bild-Information über Suchbegriffe (denen eine Adresse zugeordnet ist) ermöglicht wird.

Ist gemäß Patentanspruch 6 mindestens die Bedienungsanleitung der Vorrichtung gespeichert, so wird das Heraussuchen der gewünschten Bild-Information noch weiter erleicht, indem die Steuereinrichtung im Dialogverfahren eine Bedienerführung ermöglicht.

Die Erfindung wird im folgenden anhand in der Zeichnung dargestellter Ausführungsformen näher beschrieben und erläutert. Es zeigt:

Fig. 1 ein Blockschaltbild des Aufbaus der erfindungsgemäßen Vorrichtung,

Fig. 2 eine schematische Darstellung von Eingabeeinrichtung und Anzeigeeinrichtung der Vorrichtung und

Fig. 3 eine schematische Darstellung zur Erläuterung der Bedienerführung.

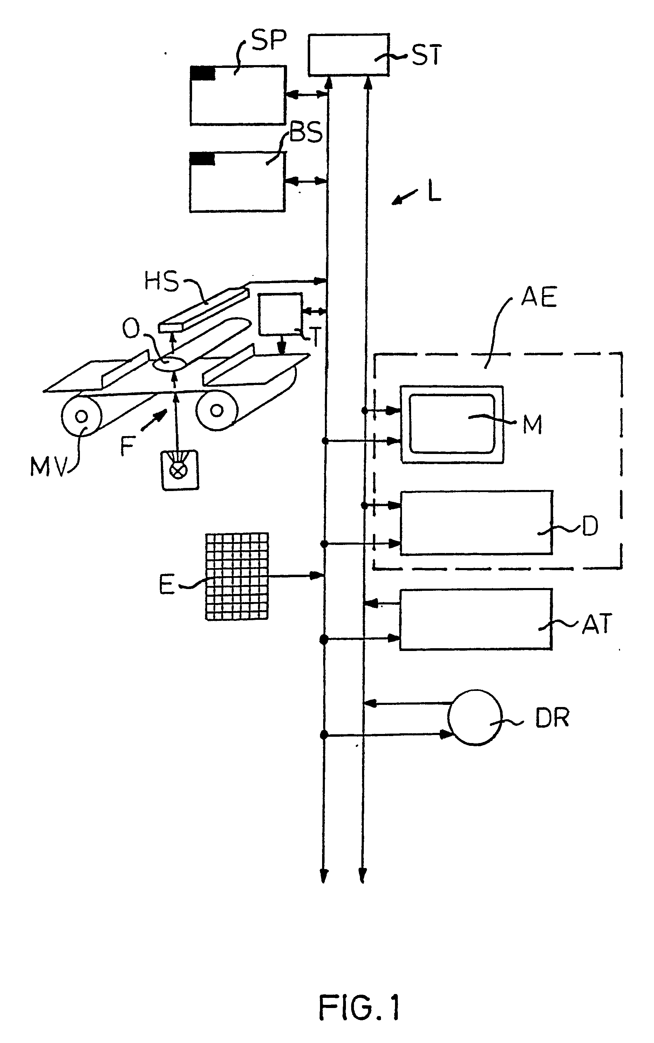

Fig. 1 zeigt das Blockschaltbild der erfindungsgemäßen Vorrichtung zum Speichern und Wiedergewinnen von Bild-Informationen einer auf einem Magnetband befindlichen Datei und einer Mikrofilm- und/oder Microfiche-Datei. Die Vorrichtung enthält eine Steuereinrichtung ST mit Programmspeicher, welche über bidirektionale Verbindungsleitungen L mit den Einrichtungen der Vorrichtung verbunden ist. Zum Speichern von Schriftgut enthält die Vorrichtung eine Abtasteinrichtung AT (Scanner), welche die aufgelegte Seite zur fotoelektrischen Umwandlung zweidimensional abtastet und einen digitalen Speicher in Form einer Magnetbandeinrichtung DR. Die vom Scanner AT abgetasteten Dokumente werden in der Magnetbandeinrichtung DR in der Reihenfolge ihrer Eingabe gespeichert, wobei die Speicherkapazität des Magnetbands ca. 1.200 Seiten DIN-A4 mit normaler Auflösung pro 1 Stunde Laufzeit beträgt. Normale Auflösung bedeutet in diesem Zusammenhang, daß beim Scanner (Abtasteinrichtung) AT eine Auflösung von 200 dpi gewählt wurde. Eine Inhaltsangabe der auf dem Magnetband abgespeicherten Dokumente befindet sich im File-Vorspann des Magnetbandes.

Weiterhin ist eine Anzeigeeinrichtung AE vorgesehen, welche bei der in Fig. 1 dargestellten Ausführungsform ein Sichtgerät mit einem Bildschirm M und einem Drucker D aufweist. Das Sichtgerät M erfüllt zwei Aufgaben, nämlich es zeigt das Bild einer eingelesenen bzw. archivierten Seite eines Dokumentes und dient zur Darstellung von Dialogmenues, von sortierten Dokumentenlisten, von Störungsmeldungen und von Help-Menues. Als Drucker DR kann beispielsweise ein Laserprinter mit einer Auflösung von 300 dpi eingesetzt werden, welcher gesteuert durch die Steuereinrichtung ST ein Dokument mit ca. 6 Seiten/Min. ausgeben kann.

Mittels einer Eingabeeinrichtung E gibt der Benutzer Steuerbefehle ein, welche von der Steuereinrichtung ST ausgewertet werden und diese veranlaßt, daß die einzelnen Einrichtungen der Vorrichtung entsprechende Funktionen ausführen. Gibt beispielsweise der Benutzer den Steuerbefehl "Einlesen" an der Eingabeeinrichtung E ein, so wird diese Funktion "Einlesen" im Zusammenspiel von Steuereinrichtung ST und Abtasteinrichtung AT ausgeführt. In entsprechender Weise erfolgt beispielsweise die Funktion "Speichern" mittels Steuereinrichtung ST und Magnetbandeinrichtung DR, die Funktion "Suchen" mittels Suchinformations-Speicher SP und Steuereinrichtung ST, die Funktion "Zeigen" mittels Bildwiederholspeicher BS, Steuereinrichtung ST und Sichtgerät M; die Funktion "Drucken" mittels Drucker D und Steuereinrichtung ST.

Eine weitere Aufgabe der Steuereinrichtung ST liegt darin, Bild-Informationen einer Mikrofilm- und/oder Microfiche-Datei wiederzugewinnen. Hierzu weist die Vorrichtung auf: Einen Mikrofilm- und/oder Microfiche-Vorratsbehälter MV, eine Filmbühne mit Kreuzschlitten und mit Beleuchtungseinrichtung F, eine mit der Steuereinrichtung ST verbundene Transporteinrichtung T für Mikrofilm und/oder Microfiche und eine Abbildungsoptik O, welche das Bild jeweils einer Abtastzeile auf einem linearen Halbleiter-Sensorelement HS abbildet. Das Halbleiter-Sensorelement HS ist mit dem Bildwiederholspeicher BS verbunden, in welchem die zeilenweise abgetastete Bildinformation eingelesen wird. Zur sichtbaren Darstellung der Bildinformation ist der Bildwiederholspeicher BS mit der Anzeigeeinrichtung AE verbunden, welche bei der in Fig. 1 dargestellten Ausführungsform das Sichtgerät M und den Drucker D umfaßt.

Zur Wiedergewinnung von Bild-Informationen der auf dem Magnetband befindlichen Datei und von Bild-Informationen der Mikrofilm- und/oder Microfiche-Datei ist der gemeinsame Suchinformations-Speicher SP vorgesehen, in welchem die Suchinformationen für die Dateien enthalten sind, wobei die Suchinformationen für die beiden Dateien jeweils das gleiche Format aufweisen. Gleiches Format bedeutet in diesem Zusammenhang, daß keine Unterschiede hinsichtlich der von den Benutzern vorgebbaren Suchbegriffen bestehen. Bei der Archivierung der Mikrofilm- oder Microfiche-Datei legt der Benutzer zu jeder der auf der Anzeigeeinrichtung AE dargestellten Bildinformation die einzelnen Suchbegriffe fest, welche zusammen mit der zugehörigen Adresse (z.B. X-Y-Koordinaten beim Microfiche) in den Suchinformations-Speicher SP eingelesen werden. Zum Wiedergewinnen von Bildinformationen steuert dann die Steuereinrichtung ST anhand dieser Suchinformationen und der jeweiligen Adresse, z.B. Microfiche-Nummer und Bildnummer auf dem Microfiche, die entsprechenden Einrichtungen an.

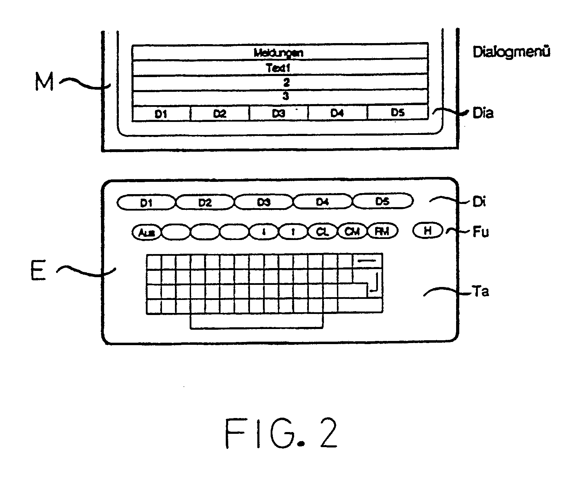

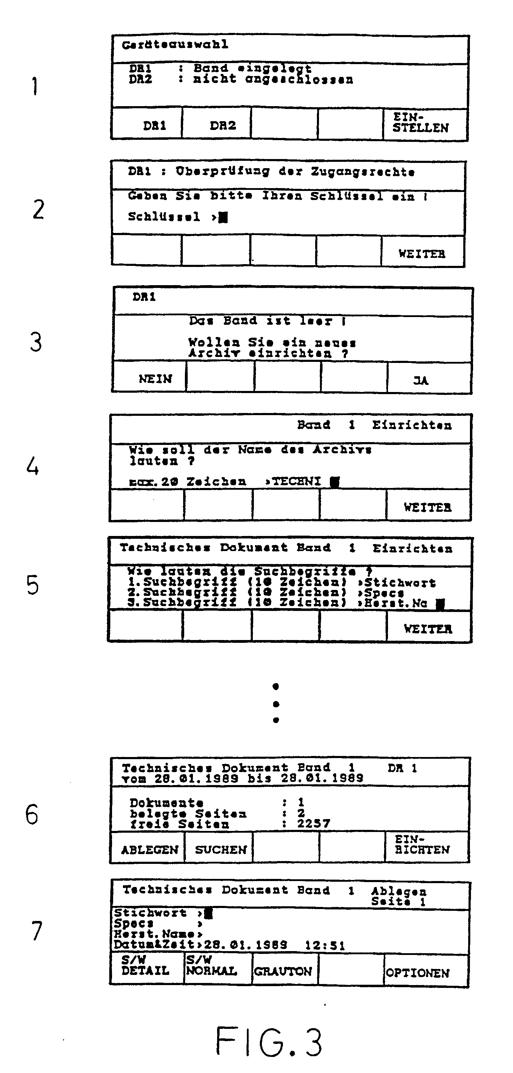

Die bereits erwähnten verschiedenen Funktionen und die bei der neuen Vorrichtung eröffnete Möglichkeit der Bedienerführung wird im folgenden anhand Fig. 2 und Fig. 3 näher erläutert. Am unteren Rand des Bildschirms des Sichtgerätes M wird das Dialog-Menue dargestellt, in welchem Informationen und Fragen der Steuereinrichtung ST an den Benutzer zusammengefaßt sind. In der untersten Reihe des Dialog-Menues sind fünf Dialogfelder Dia (D1 bis D5) angeordnet, welchen die fünf Dialogtasten Di(D1 bis D5) der Eingabeeinrichtung E geometrisch zugeordnet sind. Unter den Dialogtasten Di sind sogenannte Funktionstasten Fu angeordnet. Mittels der Funktionstaste H kann das Help-Menue aufgerufen werden; mittels der Funktionstaste RM kann der Benutzer zum vorherigen Menue zurückkehren; mittels der Funktionstaste CM kann eine Eingabe in einem Menue vollständig gelöscht werden; mittels der Funktionstaste CL können vom Benutzer eingegebene Zeichen einer Zeile in welcher sich der Zeilen-Cursor befindet, vollständig gelöscht werden; mittels der beiden daneben angeordneten Tasten kann der Zeilen-Cursor aufwärts/abwärts bewegt oder das am Bildschirm des Sichtgerätes M sichtbare Bild verschoben werden und schließlich kann mittels der Funktionstaste "Aus" das korrekte Ausschalten der Vorrichtung bewirkt werden, wobei alle Informationen und Dokumente, die noch nicht auf dem digitalen Speichermedium archiviert sind, sortiert abgelegt werden. Schließlich enthält die Eingabeeinrichtung E eine unter den Funktionstasten angeordnete Tastatur Ta, welche der alphanumerischen Tastatur einer Schreibmaschine entspricht.

Fig. 3 zeigt den Funktionsablauf und die entsprechende Darstellung verschiedener Dialog-Menues 1 bis 7 auf dem Bildschirm des Sichtgerätes M. Im Dialog-Menue 1 der Fig. 3 ist das sogenannte Start-Menue dargestellt, in welchem die Meldung enthalten ist, daß die Vorrichtung betriebsbereit ist und daß für die entsprechende Eingabe die zwei Dialog-Tasten D1 und D5 vom Benutzer zu betätigen sind.

Nach dem Start-Menue erfolgt die Überprüfung der Zugangsrechte (Dialog-Menue 2) und nach dieser Überprüfung der Zugangsrechte kann die Einrichtung eines neuen Archives erfolgen (Dialog-Menues 3 bis 5).

In den beiden Dialog-Menues 6 und 7 der Fig. 3 ist die Bedienerführung beim Einlesen eines Archiv-Bandes dargestellt.

In gleicher Weise erfolgt das Wiedergewinnnen von Bild-Informationen der Mikrofilm- und/oder Microfiche-Datei, wobei stets die Steuereinrichtung ST eine Bedienerführung über das Dialog-Menue ermöglicht.

## Ansprüche

1. Vorrichtung zum Speichern und Wiedergewinnen von Bildinformationen, bei der die Bild-Informationen in einer Datei gespeichert sind und mittels gespeicherter Suchinformationen wiedergewonnen werden, dadurch gekennzeichnet, daß die Vorrichtung eine Steuereinrichtung (ST) zum Wiedergewinnen von Bild-Informationen einer auf einem Magnetband befindlichen Datei und von Bild-Informationen einer Mikrofilm- und/oder Mikrofiche-Datei enthält und daß die im Suchinformations-Speicher (SP) enthaltenen Suchinformationen für die Dateien das gleiche Format aufweisen.

2. Vorrichtung nach Anspruch 1, dadurch gekennzeichnet, daß die Vorrichtung eine Eingabeeinrichtung (E) zur Eingabe von Suchinformationen aufweist, welche mit einer Anzeigeeinrichtung (AE) zum Wiedergeben der aus den Dateien ausgelesenen Bildinformationen und der Steuereinrichtung (ST) verbunden ist.

3. Vorrichtung nach Anspruch 2, dadurch gekennzeichnet, daß die Vorrichtung einen Mikrofilm- und/oder Mikrofiche-Vorratsbehälter (MV), eine Filmbühne mit Kreuzschlitten und mit Beleuchtungseinrichtung (F), eine mit der Steuereinrichtung (ST) verbundene Transporteinrichtung (T) für Mikrofilm und/oder Mikrofiche, eine Abbildungsoptik (O), welche das Bild jeweils einer Abtastzeile auf einem linearen Halbleiter-Sensorelement (HS) abbildet und einen mit dem Halbleiter-Sensorelement (HS) verbundenen Bildwiederholspeicher (BS) umfaßt, der mit der Anzeigeeinrichtung (AE) verbunden ist.

4. Vorrichtung nach Anspruch 3, dadurch gekennzeichnet, daß die Vorrichtung eine zweidimensionale Abtasteinrichtung (AT) aufweist, welche die Bild-Informationen für fotoelektrische Umwandlung zweidimensional abtastet und daß die Abtasteinrichtung (AT) mit der Steuereinrichtung (ST), mit einer Magnetbandeinrichtung (DR), mit dem Bildwiederholspeicher (BS) und der Anzeigeeinrichtung (AE) verbunden ist.

5. Vorrichtung nach Anspruch 2, dadurch gekennzeichnet, daß die Anzeigeeinrichtung (AE) ein Sichtgerät mit einem Bildschirm (M) und einen Drucker (D) ausweist.

6. Vorrichtung nach einem oder mehreren der Ansprüche 1 bis 5, dadurch gekennzeichnet, daß mindestens die Bedienungsanleitung der Vorrichtung gespeichert ist und daß die Steuereinrichtung (ST) im Dialogverfahren eine Bedienerführung zum Speichern und Wiedergewinnen von Bild-Informationen ermöglicht.

EP 0 387 673 A2

FIG.1

| Meldungen | | | | |
|---|---|---|---|---|
| Text1 | | | | |
| 2 | | | | |
| 3 | | | | |
| D1 | D2 | D3 | D4 | D5 |

FIG. 2

| Geräteauswahl | | | | |
|---|---|---|---|---|
| DR1 : Band eingelegt<br>DR2 : nicht angeschlossen | | | | |
| DR1 | DR2 | | | EIN-<br>STELLEN |

| DR1 : Überprüfung der Zugangsrechte | | | | |
|---|---|---|---|---|
| Geben Sie bitte Ihren Schlüssel ein !<br><br>Schlüssel ›█ | | | | |
| | | | | WEITER |

| DR1 | | | | |
|---|---|---|---|---|
| Das Band ist leer !<br><br>Wollen Sie ein neues<br>Archiv einrichten ? | | | | |
| NEIN | | | | JA |

| Band 1 Einrichten | | | | |
|---|---|---|---|---|
| Wie soll der Name des Archivs<br>lauten ?<br><br>max.20 Zeichen ›TECHNI █ | | | | |
| | | | | WEITER |

| Technisches Dokument Band 1 Einrichten | | | | |
|---|---|---|---|---|
| Wie lauten die Suchbegriffe ?<br>1.Suchbegriff (10 Zeichen) ›Stichwort<br>2.Suchbegriff (10 Zeichen) ›Specs<br>3.Suchbegriff (10 Zeichen) ›Herst.No █ | | | | |
| | | | | WEITER |

· · ·

| Technisches Dokument Band 1 DR 1<br>vom 28.01.1989 bis 28.01.1989 | | | | |
|---|---|---|---|---|
| Dokumente : 1<br>belegte Seiten : 2<br>freie Seiten : 2257 | | | | |
| ABLEGEN | SUCHEN | | | EIN-<br>RICHTEN |

| Technisches Dokument Band 1 Ablegen<br>Seite 1 | | | | |
|---|---|---|---|---|
| Stichwort ›█<br>Specs ›<br>Herst.Name›<br>Datum&Zeit›28.01.1989 12:51 | | | | |
| S/W<br>DETAIL | S/W<br>NORMAL | GRAUTON | | OPTIONEN |

FIG.3